# EUROPEAN PATENT SPECIFICATION

(11) **EP 1 255 714 B1**
(45) Date of publication and mention of the grant of the patent: **09.02.2005**
(21) Application number: 00960695.5
(22) Date of filing: 11.09.2000
(51) Int. Cl.: C05F 17/00, C05F 17/02, C05F 9/04

(54) **METHOD OF PREPARING SOIL CONDITIONER, AND APPARATUS USED IN THE METHOD**
VERFAHREN ZUR HERSTELLUNG VON BODENKONDITIONIERERN UND VERWENDETE VORRICHTUNG
PROCEDE PERMETTANT DE PREPARER UN CONDITIONNEUR DE SOL ET APPAREIL UTILISANT LEDIT CONDITIONNEUR DE SOL

(30) Priority: 10.09.1999 FI 991936
(43) Date of publication of application: 13.11.2002
(73) Proprietor: OY Ecospec Ltd, 69600 Kaustinen (FI)
(72) Inventor: VERTANEN, Päiviö, FIN-69100 Kannus (FI)
(74) Representative: Lax, Monica Ingeborg
(86) International application number: PCT/FI2000/000765
(87) International publication number: WO 2001/021554

(56) References cited:
- EP-A2- 0 884 294
- WO-A1-98/07670
- DE-A1- 3 830 289
- DE-A1- 19 513 701
- GB-A- 1 401 566
- US-A- 4 135 908
- US-A- 5 206 173
- US-A- 5 942 022

## Description

### BACKGROUND OF THE INVENTION

The invention relates to a method of preparing a soil conditioner by supplying air into a substantially sealed space containing a mixture of plant-originating or animal-originating organic substance and peat, the mixture having about 70% moisture, the temperature in the space rising to between 70 and 75°C. The invention also relates to an apparatus usable in the method.

The 1990's witnessed an increasing need for a more natural production of plants, including improvement of the soil. Fields have typically been spread with chemical fertilizers, liquid manure and composted waste. However, the problem in fertilizing agricultural land with conventional chemical fertilizers or liquid manure is the usability of nutrients and their leakage from the soil to waterways, where they cause eutrophication.

Known composting methods and apparatuses usually provide an initial compost within some days or weeks, after which a post-composting step of the duration of weeks or even months is still needed to obtain a product fulfilling quality requirements. Finnish Patent Application 962 431, for example, discloses a weight-hopper composting device comprising composting modules arranged on a supporting base. Air is supplied to the composting device through the material to be composted having a diminished air pressure. The composting temperature is between 55 and 60°C. Odours (ammonia) are eliminated from the exhaust gas by means of a bio filter. The initial 10 to 14-day composting is succeeded by an about 3-month post-composting in heaps.

EP-A 633 235 teaches a sealed reactor container having an air-permeable bottom, under which ventilating pipes are arranged. The composting apparatus has a sealed gas circulation and oxygen is added to the gas to be applied to the mass. The water evaporating from the mass is compressed and cooled by means of condensation in a heat exchanger, and the exhaust air containing carbon monoxide is returned to the reactor. When the sealed apparatus is opened, the gas therein is purified before emission to the atmosphere.

DE 38 30 289 discloses an apparatus and method for composting mainly liquid material. The reactor vessel is a lying cylinder having a double wall structure. The composting reaction takes place at ambient temperature. The device is closed air-tightly and the pressure of the compost is lowered below the partial pressure of the water therein in order to dry the product. Detrimental microbes are also destroyed by means of vacuum, not heat. Dischargeable gases are filtered with a bio fitter and disinfected by UV radiation.

DE-A 195 13 701 teaches a seated aerating reactor having a screen base. The essential idea of the method described in the publication is the alternation of overpressure and underpressure at intervals by alternating between gas supply and gas discharge.

Known composting methods require a complex and expensive equipment. The progress and conditions of the reaction have to be followed, requiring either an expensive apparatus or human labour. The gas discharged from the reactions needs purification.

### BRIEF DESCRIPTION OF THE INVENTION

The object of the invention is to provide a method of preparing a soil conditioner by means of biological decomposition, and an apparatus to be used in the method so as to offer an environmentally friendly and fast composting method and apparatus that require little human labour and whose material costs and operating costs are low, and the obtained product well preservable, easily usable, effective and easy to store/transport. An inexpensive price and adjustable capacity allow small waste treatment plants to be grounded close to the origin of the waste. The product obtained is easy to store and transport to the place of use, which may located far away.

The invention thus relates to a method of preparing a soil conditoner by supplying air to a substantially seated space containing a mixture of an undecomposed plant-originating or animal-originating substance and peat, the mixture having about 70% moisture, the temperature in the space rising to between 70 and 75°C.

The method of the invention is characterized by continuing the supply of air to the mixture to keep the temperature above 70°C for about 24 hours, and lowering the pressure above the mixture by at least about 10 to 500 Pa until the moisture of the mixture is at most 50% by weight.

The invention also relates to an apparatus usable in the method and comprising one or more reactor composting devices, one or more fans, one or more exhausters, and means for measuring temperature and air pressure and for adjusting airflow. The apparatus of the invention is characterized in that at least one wall comprises one or more openable pressure-tight doors and in that a reactor base comprises punched ventilating pipes, the diameter of the holes in said pipes being 1 mm, the distance between the pipes being about 0.5 metres and the distance between the holes in the ventilating pipes being between 50 and 300 mm, becoming denser towards that end of the pipe where the pressure is lower. The punched ventilating pipes are embedded in a floor 1 to 5 mm above a casting surface.

The invention also relates to a soil conditioner prepared by the invention and the use thereof.

A preservable product refers to a soil conditioner containing active mycocelial filaments. Its moisture is preferably below about 50% (bulk product) or even below 10% (bagged, briquette-form product). In a dry product, the mycocelial filaments are in a state of dormancy. Under long-term storage, a low humidity contributes to the retention of nitrogen in the mass.

In this context, active mycocelial filaments refer to filaments (mycelia) that decompose organic substances and promote the dissolution of nutrients and, consequently, their transfer to the use of the plants, under the decomposition.

In this context, a substantially sealed reactor means that the reactor is sufficiently tight to generate overpressure, but, however, vent gas (air) 'leaks' to an extent enabling continuous supply of clean air. Should composting not proceed rapidly, a considerable amount of moisture and nitrogen would evaporate together with the vent gas, thus further slowing down the reaction.

The invention is thus based on the fact that blowing air in the mixture to be composted and the aerobic decomposition initiated by the natural microbes (fungi) in peat generate an overpressure and a temperature rise to 70°C. Heat, pressure and continuous even aeration ensure a rapid, even and odourless aerobic decomposition process that can be interrupted by drying with vacuum suction, the content of organic undecomposed substance being for example 50%, calculated from the dry solids, after about 1 to 2 days after the rise in temperature. The aeration is continued non-stop also during the drying step. Hereby the temperature destroys harmful microbes and seeds of weeds, and the mycocelial filaments enter in a state of dormancy. On the other hand, the product contains sufficiently undecomposed organic substance, providing the mycocelial filaments with a good culture medium after activation.

The advantage provided by the method and system of the invention is considerable speed. A mass composted for only about 1 to 2 days is ready for use as a fertilizer after an aerobic drying step without post-composting. For storage or transport, the mass is preferably further dried and briquetted.

The workload required by the method is negligible. Owing to rapid decomposition, the moisture does need to be controlled during the reaction. The starting material can be prepared and the reactor batched by the use of conventional agricultural machinery and a screen bucket, for example.

Composting waste reduces the load on the environment by returning organic material to the ecological cycle.

No harmful or malodorous gases are generated in an aerobic decomposition process.

### BRIEF DESCRIPTION OF THE FIGURE

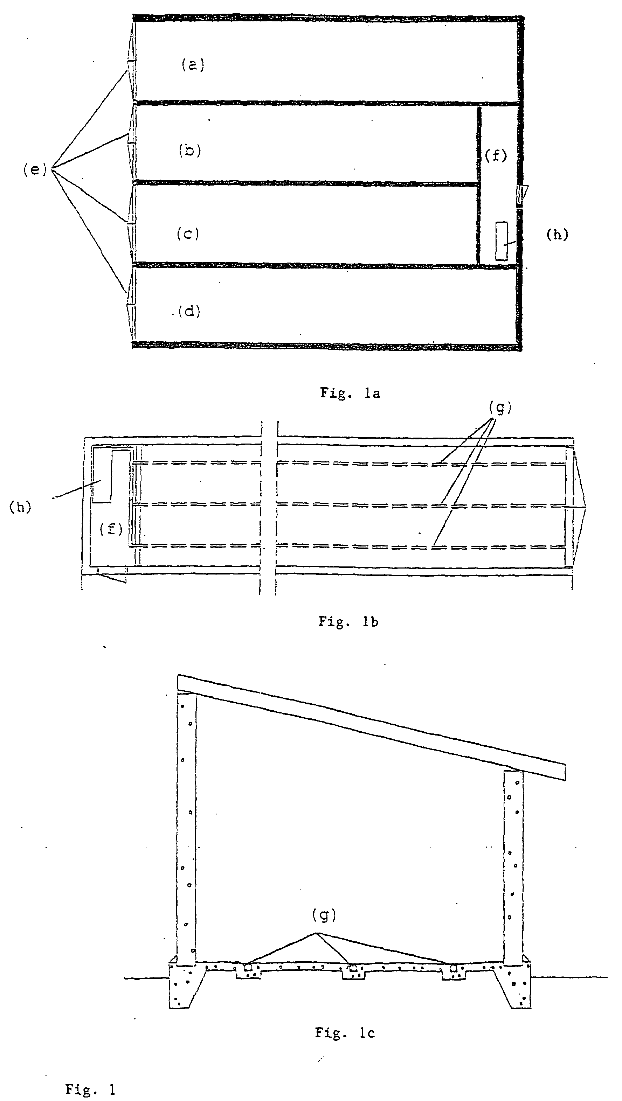

Figure 1 shows the general structure of the apparatus. Figure 1a is the floor plan of a composting apparatus comprising four reactor chambers (a, b, c, d). Each end of a reactor chamber comprises a pressure-tight door (e). In this solution, a machine room (f), in which fans (h), an exhauster and a monitoring system for measuring equipment are placed, is at the rear of the composting device. Figure 1 b is a floor plan of one of the reactor chambers (a, b, c or d) of the composting device of Figure 1a. Figure 1c is a cross-section of a reactor chamber. For the sake of clarity, Figures 1b and 1c only show three parallel longitudinal aeration ducts (g).

### DETAILED DESCRIPTION OF THE INVENTION

In the method of the invention, a soil conditioner is prepared by decomposing a mixture of peat and an animal-originating or plant-originating material under aerobic conditions so that the biological decomposition raises the temperature of the mixture to above +70°C.

Peat is one of the main components of the material to be composted. The peat may be any peat containing vigorous flora. The peat is preferably dried peat, in which the natural flora is in a state of dormancy.

Suitable animal-originating starting materials include bovine manure, poultry manure, sludge from a sewage disposal plan or piggery, or urine absorbed into peat. Owing to its high nutrient content, fur animal manure is particularly advantageous. When sludge is used as the starting material, the amount of the support material, i.e. peat, has to be increased so that the humidity of the starting mass is about 70% by weight.

In a preferred embodiment, screened peat and animal-originating or plant-originating material are mixed applying the sandwich principle, and air is led to the obtained mixture. The temperature hereby rises as a result of the biological decomposition initiated by the natural flora in the material to between 70 and 75°C and the pressure rises about/at least 5 to 10 Pa. Air is continuously led to the mixture so that the temperature remains above +70°C for about 24 hours.

In the sandwich method, a 10 to 20-cm layer of dry peat (= stabiiizing material) and 10 to 20 cm of the material to be composted are screened several layers on top of each other. Air supply is initiated, whereupon the reactor is batched starting from the rear by screening a mixture taken from the sandwich bed to the final filling height. This way an even and loose compost mass not containing oxygen-free spots is obtained.

The upper limit of the pressure is not critical. The pressure may be 0.05 bar, even higher. It is essential that the pressure is sufficient to achieve, together with the raised temperature, even moisture in the reactor vessel. A slight overpressure is sufficient to achieve this.

The reaction is stopped by lowering the pressure above the mass with a discharge exhauster by at least/about 100 to 500 Pa during 1 to 2 days, i.e. until the moisture of the mass is about 50% by weight, even below that. Aeration is continued without interruptions. Alternatively, the pressure may be lowered at intervals of 4 to 12 hours for 1 to 10 minutes during 2 to 6 days, until the desired moisture content is obtained in the mass. The underpressure may be even 0.5 bar. In underpressure, it is essential to reach a pressure distinctly below the ambient pressure.

At its fastest, the entire composting process only takes three days. The initiation step usually takes about 1 to 3 days. The actual composting reaction takes 1 to 2 days; usually one day is sufficient. The drying/stopping reaction also takes 1 to 2 days. Cold and/or moist air outdoors may lengthen the reaction times with more than 24 hours.

In cold weather, the drying/reaction stopping time of the mass can be shortened by heating the air to be supplied to the reactor in a heat exchanger with discharge air.

The method of the invention provides in a few days a soil conditioner that fulfils the quality requirements. Post-composting is not needed. The soil conditioner preferably contains at least 50% by weight of undecomposed organic material calculated from the dry solids. The soil conditioner is usable as such. To facilitate storage and transport, the moisture of the soil conditioner can be further lowered by applying a longer drying time and/or continuing the drying in a hot drying drum up to about 10% by weight of moisture. The soil conditioner can be further dried, pelletized with a compressor to briquettes, and packaged for storage and transport.

When desired, the nitrogen content of the product can be raised by the addition of nitrogen-containing organic liquid or vacuolar fluid from plants to the mixture; suitable substances include urine and vacuolar fluid from potatoes, for example. Urea may also be used.

The apparatus used in the method of the invention comprises one or more composting reactors, one or more fans, one or more exhausters, and means for measuring temperature and air pressure and for adjusting airflow. Optionally, the apparatus may also comprise a heat exchanger.

The wall structures of the composting device are preferably concrete elements and the floor is preferably of casting concrete. At least one wall comprises one or more openable pressure-tight doors.

Punched ventilating pipes are embedded in the floor and are preferably of an acid-proof quadratic steel pipe and so placed that the holes project from the casting surface. The distance between the holes in the pipes is preferably between 50 and 300 mm, becoming smaller towards that end of the pipe where the pressure is lower. The pipes are preferably placed about 0.5 metres apart. The placement and punching of the pipes are arranged so as to ensure an even aeration of the mass during the reaction.

Air is blown to the reactor with one or more low-power fans. The amount of air is separately adjusted for each reactor, should several reactors be involved.

The power of the exhauster is also low so as to preferably lower the pressure above the mass in the reactor by about 100 to 500 Pa in 1 to 10 minutes.

The external energy required by the reaction is limited to low-powered supply and discharge fans, of which only a 3-kW supply fan, for example, is continuously switched on. The operating costs of the apparatus are about FIM 0.07 per one kilo of fur animal manure. The manufacturing costs of the apparatus are also significantly low, and the apparatus is suitable for use without extra insulation or heat even at a temperature of -25°C.

The product obtained in accordance with the invention possesses a plurality of good characteristics. Stopping the composting process maintains the soil-conditioning effect of the composted mass in the soil owing to the decomposition caused by the organic substance and mycocelial filaments in the mass. Stopping the composting reaction by removing moisture, the mycocelial filaments in the mass enter in a state of dormancy, and are activated again when moisture increases. The soil conditioner of the invention thus promotes the formation of mycocelial filaments in the soil. Fungoid growth retains nutrients in the soil thus reducing the load on leachates and the amount of fertilizers required. Furthermore, mycocelial filaments release nutrients from organic materials so that they are more easily accessible to plants. The mass contains abundantly undecomposed organic substance, and nutrients are gradually released to the use of plants. The high temperature has destroyed any harmful microbes and seeds of weeds. Owing to its effectiveness, the product obtained is also ecological and suitable for natural production.

Used in field cultivation experiments on oats and potato in an amount corresponding to a chemical fertilizer in respect of nitrogen, the fertilizer prepared according to the invention yielded a crop of oats and potato that corresponded to at least that of a chemically fertilized experimental plot.

The size of feed clover fertilized with the product prepared in accordance with the invention (1,000 kg/ha) was almost double in respect of chemically fertilized feed clover. Biological fertilization favoured feed clover. The nutrient value of the feed turned out to be exceptionally good.

Use in a home garden in growing sunflowers showed that the length of plants fertilized with the product prepared by the method of the invention was up to three times that of others. The stems of the flowers were so strong that they needed no support at all. The colour of the flowers was deeper, and the number of earthworms increased in the soil.

### Example 1

### Composting reactor

The reactor used comprised a quadratic 4 metres high space made of concrete elements and having a volume of 150 m³. One wall comprised a 3.8 m high and 4m wide pressure-tight door (Figures 1b and 1c). The dimensions were so chosen that the reactor is easy to fill and empty mechanically. The floor was of casting concrete, with quadratic acid-proof steel ventilating pipes having an internal cross section of 20 cm² embedded therein. The pipes were placed at intervals of 0.5 metres 1 to 5 mm above the casting surface, and they were punched with 1-mm holes, first, close to the fan, more sparsely (distance between holes 300 mm), and at the end more densely (the last holes at 50-mm intervals). The device also comprised one fan (power 3 kW), a heat exchanger for heating incoming air during the drying step with the discharge air of a second reactor that was in the drying step, and an exhauster (power 5 kW) for removal of moisture and final drying. For monitoring the composting process, the device was provided with a thermometer, and the device also comprised means for adjusting airflow and clock control means.

### Example 2a

### Composting steps

Peat and fur animal manure were screened to a particle size below 50 mm in volumetric ratios 1:1 (corresponding to weight ratio 1:3) to several about 15-cm layers on top of each other. Air supply was started at a 60-m³/h speed using the reactor of Example 1. Starting from the rear, the reactor was batched to a height of 1.5 metres with a screen bucket with a mixture extracted from the sandwich bed. The volumetric efficiency was between 40 and 60%. The reactor was sealed, whereby a clear overpressure (5 to 10 Pa) was generated in the compost. During 24 hours, the temperature rose to above 70°C because of decomposition initiated by aerobic microbes, particularly fungi, present naturally in the mass to be composted. Air supply was continued so that the temperature remained above 70°C during 24 hours. Owing to the pressure, the temperature and the even supply of air, the mixture and gas in the reactor were saturated evenly with aqueous steam. Owing to the rapid decomposition, the moisture in the reactor remained sufficient without any need to moisten the supply air. During the decomposition, a slight amount of quite odourless gas 'leaks' from the overpressurized reactor to the environment. The ventilating equipment according to Example 1 and the pressure continuously kept the mass uniformly oxidized without any need for mixing. Since the mass contained no anaerobic spots, no formation of malodorous ammonia gas was observed at any time.

### Example 2b

As Example 2a, except that air was supplied at 50 m³/h.

### Example 3a

### Stopping the composting and drying the mixture

The reduction in the moisture of the mixture was initiated by switching on a vacuum fan (suction effect 4 m³/min) at intervals of four hours for about 10 minutes, the underpressure being about 100 to 125 Pa. The air supplied was heated with a heat exchanger using process energy. The experiment was carried out in winter conditions. Moist air was removed for 2 days, i.e. until the moisture of the mixture was about 50% by weight. The pH value of the product was 7.8, and it smelled like a decomposing substance. The assay of the product was as follows:

| | |
|---|---|
| Dry solids g/kg | 448 |
| Ash content g/kg | 223 |
| Total phosphorus g/kg | 14.3 |
| Total nitrogen g/kg | 11.9 |
| Potassium g/kg | 7.9 |
| Calcium g/kg | 120 |
| Magnesium g/kg | 4.7 |

All contents are calculated on the fresh weight.

### Example 3b

### Stopping the composting and drying the mixture

The reduction in the moisture of the mixture was initiated by switching on a vacuum fan (suction effect 4 m³/min), the underpressure being about 100 to 125 Pa. The suction was continued non-stop until the moisture of the mixture was about 50% by weight, i.e. about 24 hours. The properties of the product obtained corresponded to those of the product in example 3a.

### Example 3c

### Stopping the composting and drying the mixture

The process was carried out as in example 3a, but the air supplied was not heated. The experiment took place in winter conditions. It took about 2 to 3 days until the moisture reached 50% per weight. The properties of the product obtained corresponded to those of the product in example 3a.

### Example 3d

### Stopping the composting and drying the mixture

The process was carried out as in example 3a, but the air supplied was not heated. It took about 48 hours until the moisture reached 50% per weight. The properties of the product obtained corresponded to those of the product in example 3a.

### Example 4a

### Composting dried sewage sludge

The apparatus used was the reactor according to example 1 and the method according to examples 2b and 3b. The starting material used was dried sewage sludge that had a dry solids content of about 20%, and peat. However, the amount of the peat, used as a support material, was increased (about +30% compared with example 2) so that the starting moisture of the mixture was about 70% by weight. The appearance and odour of the product obtained corresponded to those of the product in example 3a.

### Example 4b

### Composting piggery sludge

The apparatus used was the reactor according to example 1. The composting was carried out as in examples 2b and 3b. The starting material used was piggery sludge having a dry solids content of about 12 to 15%. However, the amount of the peat, used as a support material, was increased (about +50% compared with example 2) so that the starting moisture of the mixture was about 70% by weight. The appearance and odour of the product obtained corresponded to those of the product in example 3a.

### Example 4c

### Composting manure concentrated with urine

The apparatus used was the reactor according to example 1. The composting was carried out as in examples 2b and 3b. The starting material used was 30% by weight of manure, 20% by weight of urine, and 50% by weight of peat. The appearance and odour of the product obtained corresponded to those of the product in example 3a.

### Example 5

### Composting at -25°C without a heat exchanger

The experiment was carried out in the winter, the average temperature being below -20°C. The composting apparatus described in example 1 was used. The reactor was batched with a mixture of peat and fur animal manure as described in example 2a. At the beginning, the starting material and the reactor were at ambient temperature. During the entire process, the air supplied was outdoor air that was not heated. The reaction started after about two weeks, but after the temperature started to rise, it quickly reached 70°C. The composting process was continued for 48 hours, and the drying/stopping reaction took less than 3 days. The appearance and odour of the product obtained corresponded to those of the product in example 3a.

### Example 6

### Drying and briquetting

Ready-made compost was applied to a tipping pocket from which it was transferred to a drying drum. After a rock pocket at the end of the drying drum, the product was blown into the main cyclone and from there to a hammer mill. After the hammer mill, the product was circulated via an intermediate cyclone to a mixing worm. After the mixing, the mass was pelletized with a compressor. The hot pellets were moved to a cooling ventilator, after which the pellets were screened and the finest particles were blown back to the main cyclone. The ready briquettes were packed in bags and stored.

### Example 7a

The product obtained in accordance with example 3d was dried and briquetted in accordance with example 6. The nutrient contents of the product obtained were

| | |
|---|---|
| Nitrogen (N) | 2.2% (soluble nitrogen 0.7%) |
| Phosphorus (P) | 2.6% (soluble phosphorus 0.2%) |
| Potassium (K) | 0.5% (soluble phosphorus 0.2%) |
| Magnesium (Mg) | 0.4% |
| Calcium (Ca) | 4.2% |
| Sodium (Na) | 0.3% |
| Moisture | 7.6% |

### Example 7b

The product obtained in accordance with example 4c, concentrated with urea, was dried and briquetted in accordance with example 6. The nutrient contents of the product obtained were

| | |
|---|---|
| Nitrogen (N) | 7.5% (soluble nitrogen 5.7%) |
| Phosphorus (P) | 2.3% (soluble phosphorus 0.15%) |
| Potassium (K) | 0.37% (soluble phosphorus 0.18%) |
| Magnesium (Mg) | 0.29% |
| Calcium (Ca) | 3.7% |
| Sodium (Na) | 0.24% |
| Boron (B) | 0.0004% |
| Copper (Cu) | 0.0018% |
| Manganese (Mn) | 0.0062% |
| Zinc(Zn) | 0.033% |
| Moisture | 14.8% |

It is obvious to a person skilled in the art that, as technology advances, the inventive concept can be implemented in a variety of ways. Thus the invention and its embodiments are not limited to the above examples but may vary within the scope of the claims.

## Claims

1. A method of preparing a soil conditioner by supplying air into a substantially sealed space containing a mixture of undecomposed plant-originating or animal-originating organic substance and peat; the mixture having about 70% moisture, the temperature in the space rising to between 70 and 75°C, **characterized by** continuing to supply air to the mixture so as to keep the temperature over 70°C for about 24 hours; after which the pressure above the mixture is reduced by at least about 100 to 500 Pa, and air is continuously supplied until the moisture of the mixture is at most about 50% by weight.

2. A method as claimed in claim 1, **characterized by** sieving the components in the mixture to be composted in layers as a sandwich bed and filling the reactor from the read by screening material from the sandwich bed up to the final filling height.

3. A method as claimed in claim 1 or 2, **characterized in that** the moisture of the composted mass after the reaction is stopped is below 50%, and even below 10%.

4. A method as claimed in any one of claims 1 to 3, **characterized in that** the soil conditioner obtained contains at least 50% by weight of the dry solids of undecomposed organic substance, and nutrients, micronutrients and mycocelial filaments.

5. An apparatus usable in a method as claimed in any of claims 1 to 4, comprising one or more reactors, one or more fans, one or more exhausters, and means for measuring temperature and air pressure and for adjusting airflow, **characterized in that** at least one wall comprises one or more openable pressure-tight doors and **in that** a reactor base comprises punched ventilating pipes, the diameter of the holes in said pipes being 1 mm, the distance between the pipes being about 0.5 metres and the distance between the holes in the ventilating pipes being between 50 and 300 mm, becoming denser towards that end of the pipe where the pressure is lower.

6. An apparatus as claimed in claim 5, **characterized in that** the ventilating pipes are embedded in a floor 1 to 5 mm above a casting surface.

7. An apparatus as claimed in claim 5, **charactarized** in that the ventilating pipes are quadratic.

8. An apparatus as claimed in claim 5, **characterized in that** the ventilating pipes are acid-proof.

## Patentansprüche

1. Verfahren zur Herstellung eines Bodenverbesserungsmittels durch Zuführung von Luft in einen wesentlich verschlossenen Raum, der eine Mischung von nicht zerfallener pflanzlicher oder tierischer organischer Substanz und Torf enthält, welche Mischung eine Feuchtigkeit von ungefähr 70% aufweist, wobei die Temperatur im Raum auf 70 bis 75°C steigt, **dadurch gekennzeichnet, dass** die Zuführung von Luft in die Mischung fortgesetzt wird, um die Temperatur zirka 24 Stunden lang über 70°C zu halten, worauf der Druck über der Mischung um zumindest zirka 100 bis 500 Pa vermindert wird, und Luft kontinuierlich zugeführt wird, bis die Feuchtigkeit der Mischung höchstens zirka 50 Gew-% beträgt.

2. Verfahren nach Anspruch 1, **dadurch gekennzeichnet, dass** die Komponenten in der zu kompostierenden Mischung schichtweise als Sandwich-Bett gesiebt werden und der Reaktor vom hinteren Teil aus gefüllt wird, indem Material vom Sandwich-Bett bis auf die endgültige Füllungshöhe gesiebt wird.

3. Verfahren nach Anspruch 1 oder 2, **dadurch gekennzeichnet, dass** die Feuchtigkeit der kompostierten Masse, nachdem die Reaktion beendet wird, unter 50% und sogar unter 10% liegt.

4. Verfahren nach einem der Ansprüche 1 bis 3, **dadurch gekennzeichnet, dass** das erhaltene Bodenverbesserungsmittel zumindest 50 Gew-% der Trockensubstanzen von nicht zerfallener organischer Substanz sowie Nährstoffe, Mikronährstoffe und Myzelien enthält.

5. Bei einem Verfahren nach einem der Ansprüche 1 bis 4 verwendbare Vorrichtung, die einen oder mehrere Reaktoren, einen oder mehrere Ventilatoren, einen oder mehrere Exhaustoren und Mittel zur Messung von Temperatur und Luftdruck und zur Regelung von Luftstrom aufweist, **dadurch kennzeichnet, dass** zumindest eine Wand eine oder mehrere öffnungsfähige druckdichte Türen aufweist und dass eine Reaktorunterlage gelochte Lüftungsrohre aufweist, wobei der Durchmesser der Löcher in den besagten Rohren 1 mm beträgt, der Abstand zwischen den Rohren ungefähr 0,5 Meter beträgt und der Abstand zwischen den Löchern in den Lüftungsrohren zwischen 50 und 300 mm ist, wobei der Abstand in Richtung auf das Ende des Rohrs kleiner wird, wo der Druck niedriger ist.

6. Vorrichtung nach Anspruch 5, **dadurch gekennzeichnet, dass** die Lüftungsrohre in einem Boden 1 bis 5 mm über einer Gußfläche eingebettet sind.

7. Vorrichtung nach Anspruch 5, **dadurch gekennzeichnet, dass** die Lüftungsrohre quadratisch sind.

8. Vorrichtung nach Anspruch 5, **dadurch gekennzeichnet, dass** die Lüftungsrohre säurefest sind.

## Revendications

1. Procédé permettant de préparer un conditionneur de sol par introduisant de l'air dans un espace sensiblement étanche contenant un mélange de matière organique non-décomposée d'origine végétale ou d'origine animale et de tourbe, le mélange présentant une teneur d'humidité d'environ 70 %, la température dans l'espace augmentant au niveau de 70 à 75°C,
**caractérisé en ce qu'**on continue à introduire de l'air dans le mélange pour maintenir la température à plus de 70°C pour 24 heures environ, puis la pression sur le mélange est réduite par au moins d'environ 100 à 500 Pa, et de l'air est introduit en permanence jusqu'à ce que la teneur d'humidité du mélange est au moins 50 % en poids.

2. Procédé selon la revendication 1, **caractérisé en ce qu'**on tamise les composants du mélange à composter en couches de type sandwich et on remplie le réacteur à partir de l'arrière par passant la matière de l'entassement de type sandwich au tamis jusqu'à la hauteur finale de remplissage.

3. Procédé selon la revendication 1 ou 2, **caractérisé en ce que**, après la réaction arrêtée, la teneur d'humidité de la masse compostée est inférieure à 50 %, même inférieure à 10 %.

4. Procédé selon l'une quelconque des revendications 1 à 3,
**caractérisé en ce que** le conditionneur de sol obtenu contient au moins 50 % en poids de la matière solide de substance organique non-décomposée, et des nutriments, des micronutriments et des filaments de mycélium.

5. Dispositif utilisable dans le procédé selon l'une de revendications 1 à 4, comportant un ou plusieurs réacteurs, un ou plusieurs ventilateurs, un ou plusieurs exhausteurs, et des moyens pour mesurer la température et la pression de l'air et pour régler le débit de l'air, **caractérisé en ce qu'**au moins une paroi comporte une ou plusieurs portes ouvrantes et étanches à pression et qu'un fond de réacteur comporte des tuyaux d'aérage perforés, les trous desdits tuyaux ayant un diamètre de 1 mm, la distance entre les tuyaux étant 0,5 mètres environ et la distance entre les trous dans les tuyaux d'aérage étant entre 50 et 300 mm environ, aux intervalles plus courtes vers le bout du tuyau, dans lequel la pression est plus basse.

6. Dispositif selon la revendication 5, **caractérisé en ce que** les tuyaux d'aérage sont enfoncés dans un plancher au niveau de 1 à 5 mm sur une surface de coulage.

7. Dispositif selon la revendication 5, **caractérisé en ce que** les tuyaux d'aérage ont une section carrée.

8. Dispositif selon la revendication 5, **caractérisé en ce que** les tuyaux d'aérage sont résistants aux acides.
